# EUROPEAN PATENT SPECIFICATION

(11) **EP 0 537 898 B1**
(45) Date of publication and mention of the grant of the patent: **12.08.1998**
(21) Application number: 92308373.7
(22) Date of filing: 15.09.1992
(51) Int. Cl.: G06F 13/40

(54) **Computer system including video subsystem**
Rechnersystem mit Videosubsystem
Système d'ordinateur comprenant sous-système vidéo

(30) Priority: 16.09.1991 US 760786; 18.09.1991 US 761586
(43) Date of publication of application: 21.04.1993
(73) Proprietor: NCR International, Inc., Dayton, Ohio 45479 (US)
(72) Inventor: Marshall, Jay A., Taylors, SC 29687 (US); Heil, Thomas F., Easley, SC 29640 (US); Parsons, Donald H., Jr., Liberty, SC 29657 (US)
(74) Representative: Irish, Vivien Elizabeth

(56) References cited:
- EP-A- 0 188 828
- EP-A- 0 263 799
- WO-A-91/15920

## Description

The present invention generally relates to computer systems of the kind providing for information transfer between computer system processors and computer video subsystems.

Video operations include the operations necessary to control video displays to communicate computer processes visually to a user. Typical video operations are performed by a video subsystem under the control of one or more system processors. For example, during video cycles, a processor might transfer display instructions and display data, to be interpreted and ultimately displayed by the video subsystem.

An image processing system is known from EP-A-0118828 which incorporates a dual bus architecture. A video bus, which is organized into a plurality of sub buses, is provided for image transfer at video data rates, while a separate bus is provided for low speed control and data transfer. EP-A-0263799 also disloses an interactive video network where video functions are channeled through a separate video bus.

It is an object of the present invention to provide a low cost, high performance computer system having the capability of effecting information transfer to a video subsystem.

According to one aspect of the present invention, there is provided a computer system including at least one system bus, at least one input/output (I/O) bus, a video bus coupled to a video subsystem and adapted to handle video cycle information, and a processing unit having a first port coupled to said system bus and a second port coupled to said video bus characterized in that said at least one input/output bus is coupled to said system bus via an interface means and is further coupled to said video bus.

According to another aspect of the present invention, there is provided a method of transferring data in a computer system including at least one system bus, a video bus coupled to a video subsystem, at least one input/output (I/O) bus coupled to said system bus via an interface means and to said video bus, and a processing unit, characterized by the steps of
performing a first video cycle via a first port of said processing unit over said video bus; and
performing a second non-video cycle via a second port of said processing unit over said system bus during performance of said first video cycle.

It will be appreciated that in a system and method according to the invention high performance is assisted by the provision of a dedicated video bus, enabling a processing unit to perform other cycles concurrently with video cycles, thereby reducing system bus loading. Furthermore, such capability is achieved with a simple, low-cost structure.

One embodiment of the present invention will now be described by way of example with reference to the accompanying drawings, in which:-

Figures 1A and 1B, when matchedly joined at their vertical bold, dashed lines, form a generalized schematic block diagram of the preferred embodiment of a computer system architecture incorporating the present invention.

Figure 2 is a schematic block diagram of an application specific integrated circuit (ASIC) for a write processor cache of the computer system in Figures 1A and 1B.

Figure 3 is a schematic block diagram of an ASIC for a read or write processor cache of the computer system in Figures 1A and 1B.

Figure 4 is a schematic block diagram of multi-tasking by a processor in a multi-processor system running parallel operations over the video bus and a system bus.

Figure 5 is a schematic block diagram of multi-tasking by a processor in a uni-processor system running parallel operations over the video bus and a system bus.

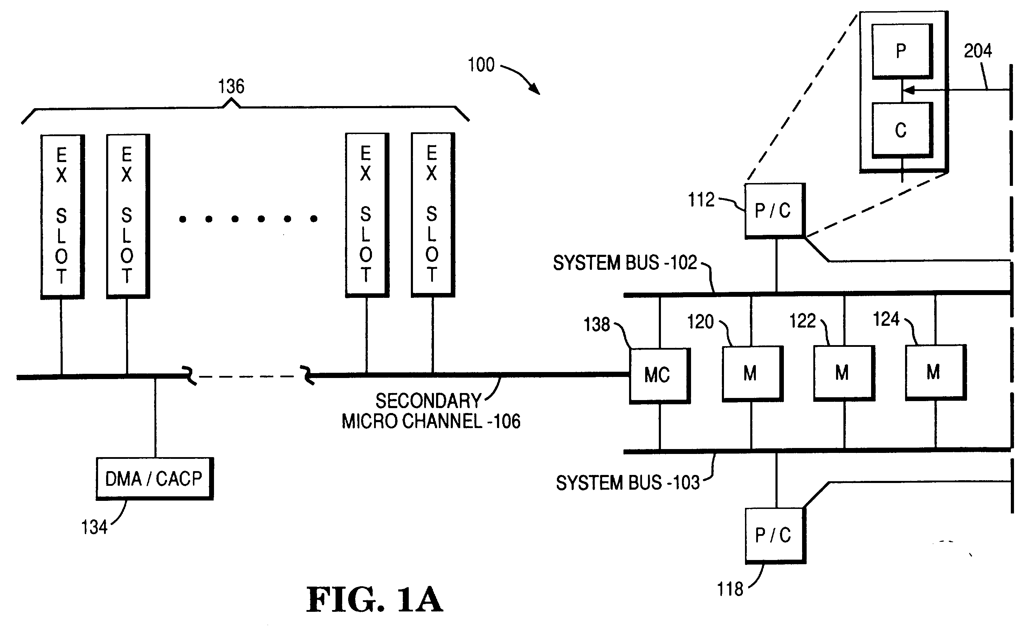

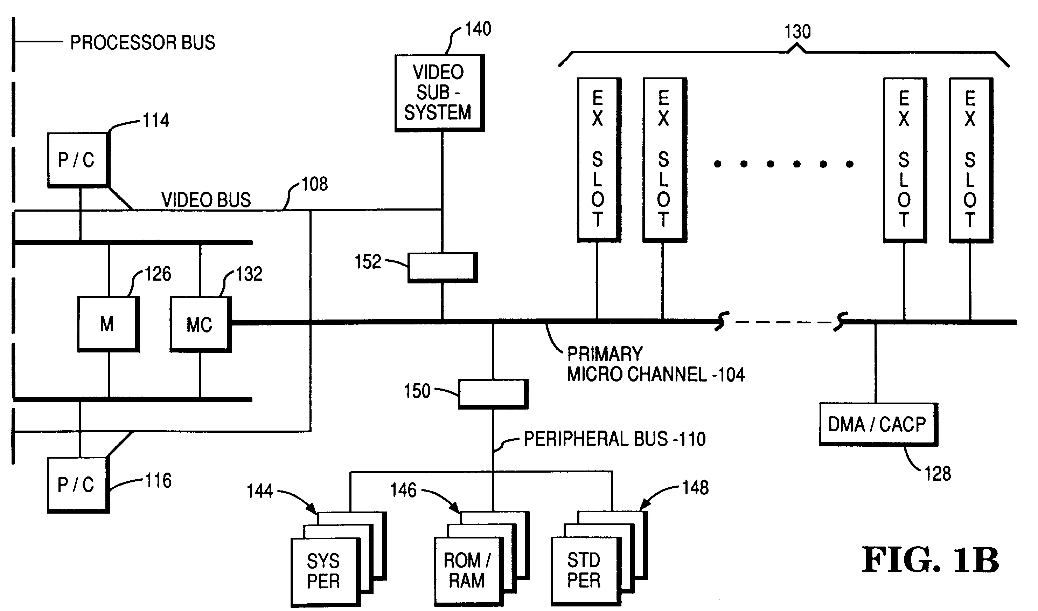

The computer system 100 in Figures 1A and 1B contains two system buses 102 and 103 for transferring information in the form of control, address and data signals, as is known in the art. A primary input/output (I/O) bus 104 and a secondary I/O bus 106 are connected to the system buses 102 and 103 via I/O bus interface circuits 132 and 138, respectively. The I/O buses 104 and 106 are personal computer (PC) compatible Micro Channel™ buses. Micro Channel is a registered trademark of the International Business Machines Corporation. The I/O buses 104 and 106 support several peripheral devices and agents, which selectively connect and disconnect to the system 100.

Two processing units (P/C) 112 and 114 are ported to the system bus 102, while two other processing units (P/C) 116 and 118 are ported to the system bus 103. The processing units each contain a central processing unit (CPU) or processor (P) and a high-speed cache memory (C), as is known in the art.

A peripheral bus 110 connects additional peripheral devices to the system 100 as needed to the primary I/O bus 104. The additional peripheral devices connected by the peripheral bus 110 in the preferred embodiment are: several read only memory/random access memories (ROM/RAMs) 146, various standard peripherals (STD PER) 148, and various system specific peripherals (SYS PER) 144. The peripheral bus 110 is buffered via a discrete buffer logic unit 150.

Combination direct memory access/central arbitration control point units (DMA/CACP) 128 and 134 are connected to I/O buses 104 and 106, respectively to control direct memory access operations. That is, operations involving memory and agents in the system 100 without intervention by a processing unit. Also connected to the I/O buses 104 and 106 are several expansion slots (EX SLOT) 130 and 136, respectively, to provide the system 100 with an expansion and upgrade feature when the user desires to add additional agents to the system 100.

A video bus 108 links the system 100 to video subsystem 140, which includes means for interpreting video information signals from the processing units 112-118 and for driving video display hardware, in a manner well-known in the art. A video bus controller/arbitration unit (not shown) in the video subsystem 140 arbitrates the video bus 108 between processing units and between agents on the I/O bus 104. Buffer logic 152 isolates the video bus 108 from the I/O bus 104. The I/O agents on the I/O bus 104 include the I/O bus interface circuit 132, the DMA controller 128, and adapters on one or more expansion slots 130. The I/O bus interface circuit 132 runs video cycles on behalf of processing units when the video bus 108 is disabled, as described, infra.

Each of the processing units 112-118 is dual ported, with one port connected to one of the system buses 102 or 103, and the other port directly connected to the video bus 108. This provides for direct access by the processing units 112-118 to the video subsystem 140. The video bus 108 is independently arbitrated so that a processing unit 112-118 need not separately arbitrate for the system buses and the I/O buses in order to perform a video cycle. In addition, because of the dual porting, the processing units need not wait until a video cycle is complete before beginning other operations via the system buses.

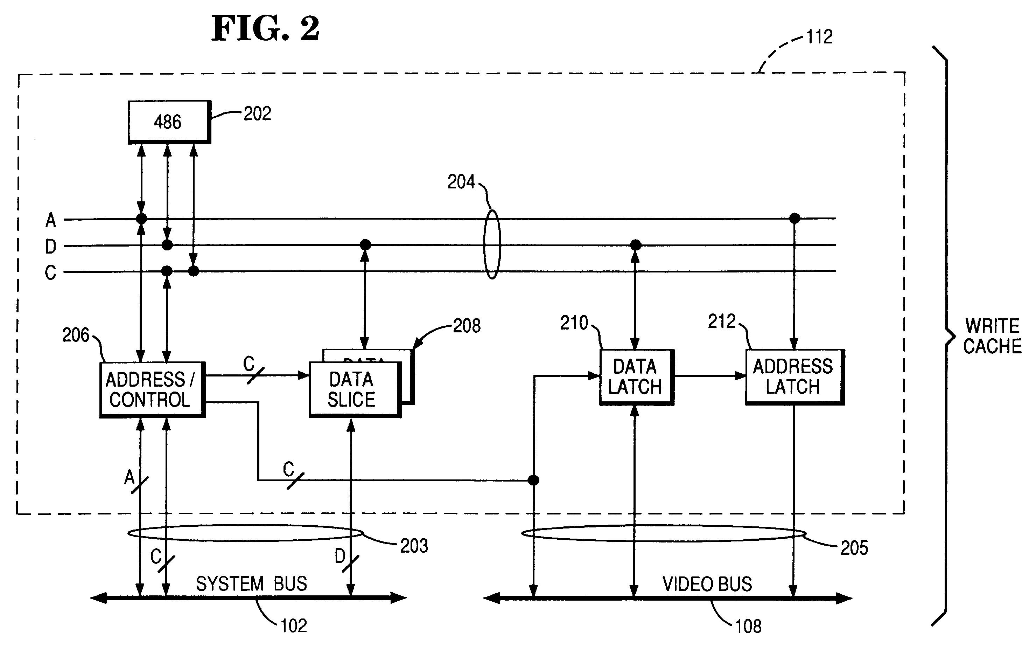

Figure 2 shows a schematic diagram of a processing unit 112 (or 114, 116, 118) connected by its two ports 203 and 205 to the system bus 102 and the video bus 108. The processor 202 in the preferred embodiment is a Model 486 of the Intel Corporation. The elements 206 and 208 form a write cache system bus interface unit implemented in several ASICs. The write cache system bus interface ASICs handle all of the cache operations of their associated processing units. Elements 210 and 212 are discrete logic buffers which buffer and latch data and address signals to/from the video bus 108. Also, the element 206 performs all of the address decode and control functions for both the system bus and video bus ports 203 and 205, respectively.

A processor bus 204 connects the processor 202 to the system bus 102 via a port formed by the input/output lines of an address/control unit 206 and a data slice unit 208. The address/control unit 206 serves as an intermediate storage device for address and control signals received from the processor 202. The address signals are received from the processor bus 204 via the processor bus line "A", while the control signals are received from the processor bus 204 via the processor bus line "C". Data signals are received from the processor bus 204 via the processor bus line "D".

The second port 205 of the processing unit 112 directly connects the processing unit 112 to the video bus 108. A data latch 210 and an address latch 212 serve to latch data and address signals received from the processor 202 via the processor bus 204.

The general operation of the computer system 100 with respect to video cycle transfers is as follows. A processing unit 112-118 desiring to make a video cycle transfer must have control of the video bus 108. Only one device can have control of the video bus 108 at a time. The requesting processing unit 112-118 generates a request for control of the video bus 108 via its port 205. (I/O bus agents can also access the video bus 108, and these requests are given priority over processing unit requests.) The video bus controller/arbitration unit (not shown) in the video subsystem 140 informs the current owner of the video bus 108 that another device is requesting ownership. When the current owner of the video bus 108 completes its video transfer, it relinquishes control of the video bus 108.

The video bus controller then passes control of the video bus 108 to the requesting processing unit, which then becomes "parked" (the exclusive owner). A processing unit remains parked while it is making video cycle transfers, and indefinitely afterwards, until another device requests control of the video bus 108. The devices requesting ownership of the video bus 108 can be either a processing unit, the I/O bus interface circuit 132, the DMA controller 128, or one or more adapters on the expansion slots 130.

A parked processing unit need not arbitrate for the video bus 108, but can begin transferring a video cycle as soon as the cycle is decoded by the address decode element 206. This provides a further system advantage because typical video processes are managed by one processor at a time. Thus, the current parked processing unit is likely to be the processing unit which will need to transfer the next video cycle, resulting in still less arbitration for the video bus 108.

Recall that video data and address signals are latched in the latches 210 and 212, respectively. Once the data and address signals are transferred to the video subsystem 140 via the video bus 108, the video bus control logic in element 206 issues an end-of of-transfer signal to the processor 202, so that the parked processor can begin concurrently executing other (non-video) cycles over the system bus 102. For example, the processor can perform a memory cycle over the system bus involving memory interleaves 120-126, while the video subsystem 140 is executing the video cycle.

Unlike video write cycles, when a processing unit performs a video read cycle, it must wait until the cycle is complete (valid data transferred from the video subsystem 140) before the processing unit can perform other cycles over the system buses. While performing video read cycles results in a time penalty compared to the performance of video write cycles, the system may still operate faster than many prior art systems. This is because a processing unit other than the one parked on the video bus 108 (and performing a video read cycle), can concurrently gain control of a system bus and perform other cycles (while the video cycle is being performed). Also, the I/O bus interface circuits 132 and 138 can gain access to I/O devices and the system memory while a video read cycle is being performed.

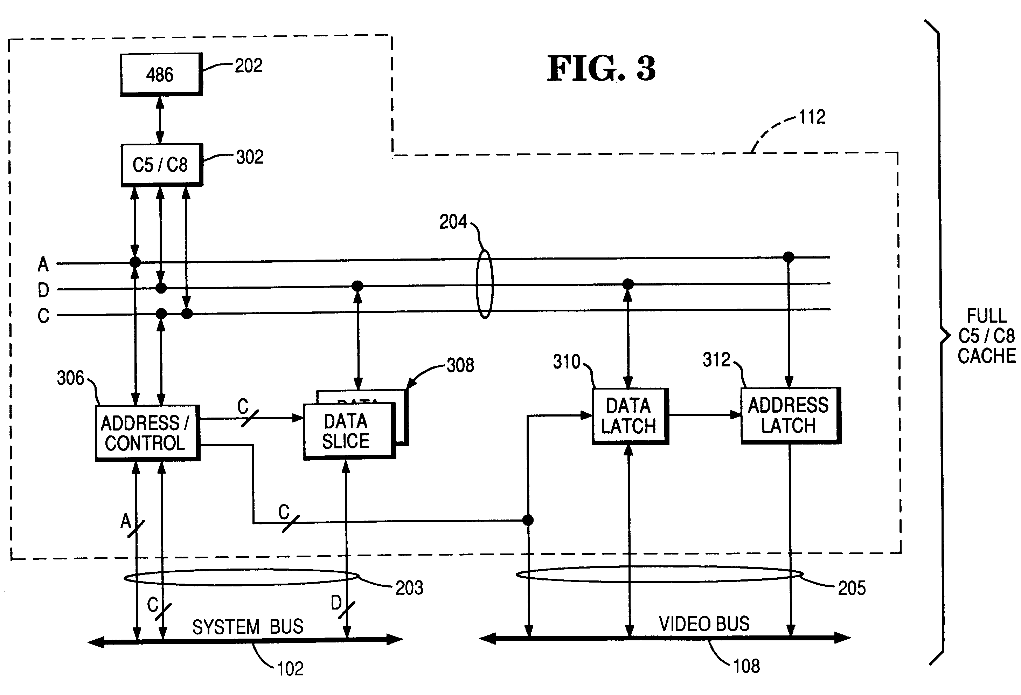

An example of a processing unit card that implements a full read/write cache instead of a write cache only, is depicted in Figure 3. The video bus management principles are identical to those described for the write cache depicted in Figure 2. As far as video bus operations are concerned, elements 306, 308, 310 and 312 function similarly to elements 206, 208, 210 and 212, respectively. The primary difference between Figure 3 and Figure 2 is the cache implementation, which does not affect the video bus operation. Specifically, the read/write cache processor unit depicted in Figure 3 uses a C5/C8 cache subsystem supplied by Intel Corporation.

The video bus 108 is software-enabled by storing the proper commands in system control registers (not shown). A disabled bus results in a default to the system and I/O buses for video cycle traffic; e.g., processing unit 112 would propagate the cycle over the system bus 102, the I/O bus 104, and through element 152 to get to the video bus 108.

The various processing units are enabled for video cycle transfer operations via system configuration registers in manners well-known in the art. One advantage of being able to disable the video bus 108 is that it can be disabled if an I/O device is found to be incompatible with the video bus.

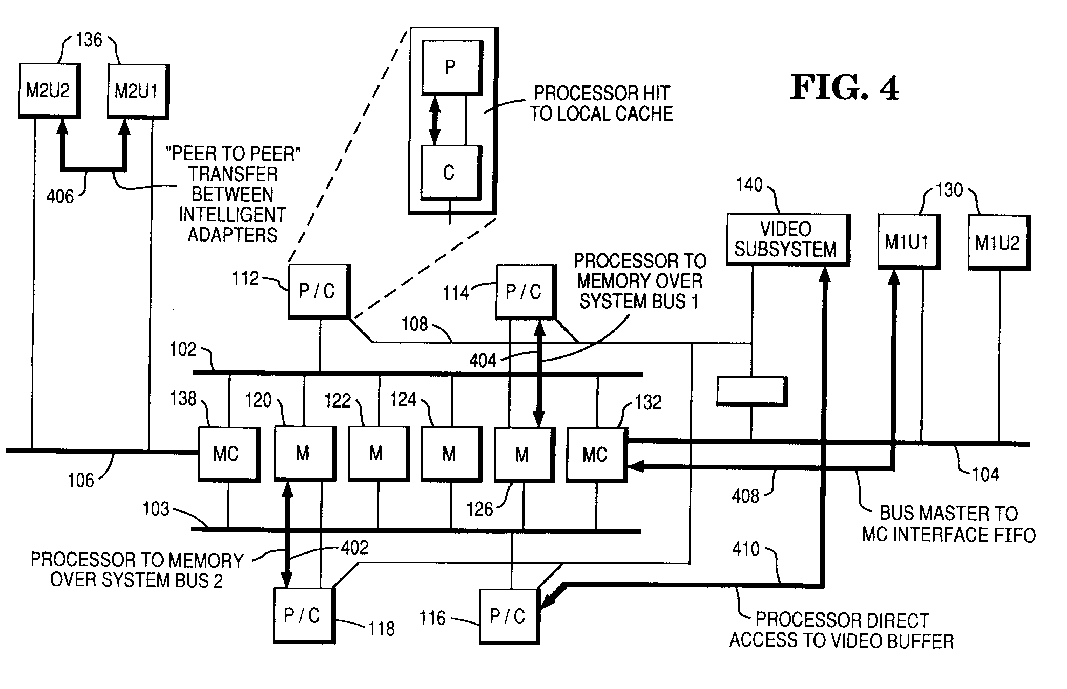

The block diagram of Figure 4 illustrates how the bus structure of the disclosed architecture facilitates operations within the multiple processor system 100 by means of the many possible concurrent operations which can be performed. For example, the processing unit 118 is coupled to the memory interleave 120 via the system bus 103 through a path 402 while the processor 114 is coupled to the memory interleave 126 via the system bus 102 through a path 404.

In addition, the following system operations occur concurrently with the operations of the processing units 118 and 114: two I/O bus agents M2U1 and M2U2 are coupled to one another via the I/O bus 106 through a path 406; a bus agent M1U1 is coupled to the I/O bus interface circuit 132 via the I/O bus 104 through a path 408, awaiting availability of one of the system buses 102, 103 for a memory operation, for example; and, the processing unit 116 is coupled to the video subsystem 140 via the video bus 108 through a path 410. The paths 402-410 are merely representative of the numerous concurrent paths through the multiple processor system 100. It should be apparent to those skilled in the art that the bus structure along with the use of memory interleaves and cache memories minimizes use of the system bus and memory of systems configured in accordance with the disclosure and teachings of the present invention, in addition to enabling concurrent operation of the system processors and agents resident on the I/O buses.

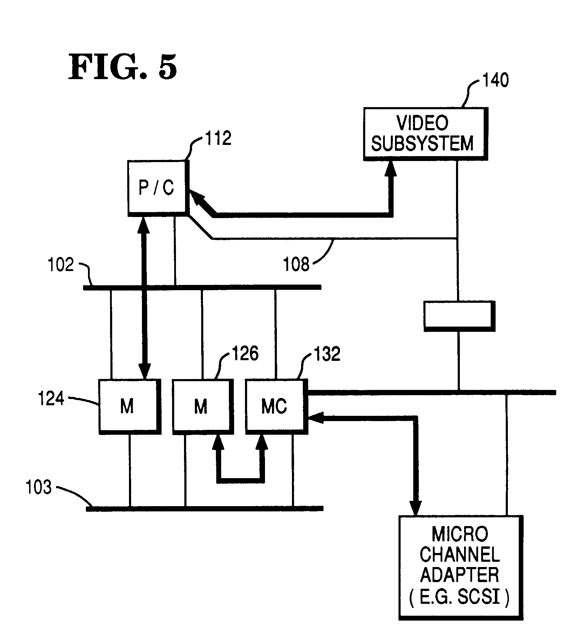

Even in the uni-processor case depicted in Figure 5, many possible concurrent paths exist.

Variations and modifications to the present invention are possible given the above disclosure. For example, the present invention need not be limited to multiple processor systems, but can work with uniprocessor systems. Also, the present invention need not be limited to multiple system bus systems, but can work with single system bus systems, as well.

## Claims

1. A computer system including at least one system bus (102), at least one input/output (I/O) bus (104), a video bus (108) coupled to a video subsystem (140) and adapted to handle video cycle information, and a processing unit (112) having a first port (203) coupled to said system bus and a second port (205) coupled to said video bus, characterized in that said at least one input/output bus is coupled to said system bus (102) via an interface means (132) and is further coupled to said video bus (108).

2. A computer system according to claim 1, characterized in that said processing unit (112) is adapted to perform a first video cycle over said video bus (108) concurrently with the performance of a second non-video cycle over said system bus (102).

3. A computer system according to claim 2, characterized in that said first video cycle is a video write cycle.

4. A computer system according to claims 2 or 3, characterized in that said second cycle is a memory cycle performed between said processing unit (112) and a memory (120,122,124) coupled to said at least one system bus (102).

5. A computer system according to claims 2 or 3, characterized in that said second cycle is performed between said processing unit (112) and at least one input/output agent (132, 128, 130) coupled to said at least one input/output bus (104).

6. A computer system according to any preceding claim, characterized in that if said video bus (108) is disabled, video cycles are propogated to said video subsystem (140) over a path including said system bus (102).

7. A computer system according to claim 6, characterized in that said video cycles are run by said interface means (132) on behalf of said processing unit (112).

8. A method of transferring data in a computer system including at least one system bus (102), a video bus (108) coupled to a video subsystem (140), at least one input/output (I/O) bus (104) coupled to said system bus (102) via an interface means (132) and to said video bus (108), and a processing unit (112), characterized by the steps of
performing a first video cycle via a first port (205) of said processing unit over said video bus (108); and
performing a second non-video cycle via a second port (203) of said processing unit (112) over said system bus (102) during performance of said first video cycle.

9. A method according to claim 8, characterized in that said second cycle is a memory cycle performed between said processing unit (112) and a memory (120,122,124) coupled to said system bus (102).

10. A method according claim 8, characterized by the step of propagating said video cycles to said video subsystem (140) over a path including said system bus (102), if said video bus (108) is disabled.

## Patentansprüche

1. Computersystem mit zumindest einem Systembus (102), zumindest einem Ein-/Ausgabe-(I/O)-Bus (104), einem Videobus (108), der mit einem Video-Untersystem (140) gekoppelt und zum Handhaben von Videozyklusinformationen ausgelegt ist, und mit einer verarbeitungseinheit (112) mit einem ersten Anschluß (203), der mit dem Systembus gekoppelt ist, und einem zweiten Anschluß (205), der mit dem Videobus gekoppelt ist,
dadurch gekennzeichnet, daß
der zumindest eine Ein-/Ausgabebus über eine Schnittstelleneinrichtung (132) mit dem Systembus (102) gekoppelt ist und ferner mit dem Videobus (108) gekoppelt ist.

2. Computersystem nach Anspruch 1, dadurch gekennzeichnet, daß die Verarbeitungseinheit (112) zum Durchführen eines ersten Videozyklus über den Videobus (108) gleichzeitig mit der Durchführung eines zweiten Nicht-Videozyklus über den Systembus (102) ausgelegt ist.

3. Computersystem nach Anspruch 2, dadurch gekennzeichnet, daß der erste Videozyklus ein Video-Schreibzyklus ist.

4. Computersystem nach Anspruch 2 oder 3, dadurch gekennzeichnet, daß der zweite Zyklus ein Speicherzyklus ist, der zwischen der Verarbeitungseinheit (112) und einem Speicher (120, 122, 124) durchgeführt wird, der mit dem zumindest einen Systembus (102) gekoppelt ist.

5. Computersystem nach Anspruch 2 oder 3, dadurch gekennzeichnet, daß der zweite Zyklus zwischen der Verarbeitungseinheit (112) und zumindest einem Ein-/Ausgabemittel (132, 128, 130) durchgeführt wird, das mit dem zumindest einen Ein-/Ausgabebus (104) gekoppelt ist.

6. Computersystem nach einem vorhergehenden Anspruch, dadurch gekennzeichnet, daß Videozyklen über einen Pfad einschließlich des Systembusses (102) zum Video-Untersystem (140) fortschreiten, falls der Videobus (108) gesperrt ist.

7. Computersystem nach Anspruch 6, dadurch gekennzeichnet, daß die Videozyklen durch die Schnittstelleneinrichtung (132) im Auftraq der Verarbeitungseinheit (112) laufen.

8. Verfahren zum Übertragen von Daten bei einem Computersystem mit zumindest einem Systembus (102), einem Videobus (108), der mit einem Video-Untersystem (140) gekoppelt ist, zumindest einem Ein-/Ausgabe-(I/O)-Bus (104), der über eine Schnittstelleneinrichtung (132) mit dem Systembus (102) und mit dem Videobus (108) gekoppelt ist, und mit einer Verarbeitungseinheit (112) ,
gekennzeichnet durch die Schritte:
- Durchführen eines ersten Videozyklus über einen ersten Anschluß (205) der Verarbeitungseinheit über den Videobus (108); und
- Durchführen eines zweiten Nicht-Videozyklus über einen zweiten Anschluß (203) der Verarbeitungseinheit (112) über den Systembus (102) während des Durchführens des ersten Videozyklus.

9. Verfahren nach Anspruch 8, dadurch gekennzeichnet, daß der zweite Zyklus ein Speicherzyklus ist, der zwischen der Verarbeitungseinheit (112) und einem Speicher (120, 122, 124) durchgeführt wird, der mit dem Systembus (102) gekoppelt ist.

10. Verfahren nach Anspruch 8, gekennzeichnet durch den Schritt des Fortschreitenlassens der Videozyklen zu dem Video-Untersystem (140) über einen Pfad einschließlich des Systembusses (102), falls der videobus (108) gesperrt ist.

## Revendications

1. Un système informatique comportant au moins un bus de système (102), au moins un bus d'entrée/sortie (E/S) (104), un bus vidéo (108) accouplé à un sous-système vidéo (140) et adapté pour traiter des informations cycle vidéo, et une unité de traitement (112) ayant une première porte (203) accouplée audit bus de système et une deuxième porte (205) accouplée audit bus vidéo caractérisé en ce que ledit au moins un bus d'entrée/sortie est accouplé (132) audit bus de système (102) par l'intermédiaire d'un moyen d'interface (132) et est encore accouplé audit bus vidéo (108).

2. Un système informatique conformément à la revendication 1, caractérisé en ce que ladite unité de traitement (112) est adaptée pour réaliser un premier cycle vidéo sur ledit bus vidéo (108) en même temps que la réalisation d'un deuxième cycle non vidéo sur ledit bus de système (102).

3. Un système informatique conformément à la revendication 2, caractérisé en ce que ledit premier cycle vidéo est un cycle d'écriture vidéo.

4. Un système informatique conformément aux revendications 2 ou 3, caractérisé en ce que ledit deuxième cycle est un cycle de mémoire réalisé entre ladite unité de traitement (112) et une mémoire (120, 122, 124) accouplée audit au moins un bus de système (102).

5. Un système informatique conformément aux revendications 2 ou 3, caractérisé en ce que ledit deuxième cycle est réalisé entre ladite unité de traitement (112) et au moins un agent d'entrée/sortie (132, 128, 130) accouplé audit au moins un bus d'entrée/sortie (104).

6. Un système informatique conformément à toute revendication précédente, caractérisé en ce que, si ledit bus vidéo (108) est invalidé, des cycles vidéo sont propagés audit sous-système vidéo (140) sur une voie comportant ledit bus de système (102).

7. Un système informatique conformément à la revendication 6, caractérisé en ce que ledit moyen d'interface (132) fait tourner lesdits cycles vidéo pour le compte de ladite unité de traitement (112).

8. Une méthode pour transférer les données dans un système informatique comportant au moins un bus de système (102), un bus vidéo (108) accouplé à un sous-système vidéo (140), au moins un bus d'entrée/sortie (E/S) (104) accouplé audit bus de système (102) par l'intermédiaire d'un moyen d'interface (132) et audit bus vidéo (108), et une unité de traitement (112), caractérisée par les étapes suivantes:
la réalisation d'un premier cycle vidéo par l'intermédiaire d'une première porte (205) de ladite unité de traitement sur ledit bus vidéo (108); et
la réalisation d'un deuxième cycle non-vidéo par l'intermédiaire d'une deuxième porte (203) de ladite unité de traitement (112) sur ledit bus de système (102) lors de la réalisation dudit premier cycle vidéo.

9. Une méthode conformément à la revendication 8, caractérisée en ce que ledit deuxième cycle est un cycle de mémoire réalisé entre ladite unité de traitement (112) et une mémoire (120, 122, 124) accouplée audit bus de système (102).

10. Une méthode conformément à la revendication 8, caractérisée par l'étape de la propagation desdits cycles vidéo audit sous-système vidéo (140) sur une voie comportant ledit bus de système (102), si ledit bus vidéo (108) est invalidé.
